(19) Europäisches Patentamt
European Patent Office
Office européen des brevets

(11) **EP 4 745 199 A1**

(12) **EUROPEAN PATENT APPLICATION**
published in accordance with Art. 153(4) EPC

(43) Date of publication:
**20.05.2026 Bulletin 2026/21**

(21) Application number: **24862372.0**

(22) Date of filing: **23.04.2024**

(51) International Patent Classification (IPC):
***C08L 101/00*** (2006.01) ***C08J 5/18*** (2006.01)
***C08K 3/22*** (2006.01) ***C08K 3/28*** (2006.01)
***C08K 5/541*** (2006.01) ***C08L 83/04*** (2006.01)

(52) Cooperative Patent Classification (CPC):
**C08J 5/18; C08K 3/22; C08K 3/28; C08K 5/541; C08L 83/04; C08L 101/00**

(86) International application number:
**PCT/JP2024/015823**

(87) International publication number:
**WO 2025/052715 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 JP 2023144286**

(71) Applicant: **Fuji Polymer Industries Co., Ltd.**
**Nagoya-shi, Aichi 450-0002 (JP)**

(72) Inventor: **KAMIYA, Yuki**
**Nagoya-shi, Aichi 463-0026 (JP)**

(74) Representative: **Dehns**
**10 Old Bailey**
**London EC4M 7NG (GB)**

(54) **THERMALLY CONDUCTIVE COMPOSITION, THERMALLY CONDUCTIVE SHEET USING SAME, AND METHOD FOR PRODUCING SAME**

(57) Provided is an uncured thermally conductive composition containing a matrix resin (component A) and thermally conductive particles, and the thermally conductive particles include the following components B and C. Component B: alumina having a D50 (median diameter) of 0.01 pm or more and less than 1 μm in a volume-based cumulative particle size distribution, and contained in an amount of 220 to 500 parts by mass with respect to 100 parts by mass of the component A. Component C: aluminum nitride having a D50 (median diameter) of 0.01 pm or more and 150 μm or less, and contained in an amount of 1900 to 2500 parts by mass with respect to 100 parts by mass of the component A. With this configuration, the present invention provides a thermally conductive composition that has a high thermal conductivity, a low degree of plasticity, and good formability, a thermally conductive sheet obtained using the thermally conductive composition, and a method for producing the thermally conductive sheet.

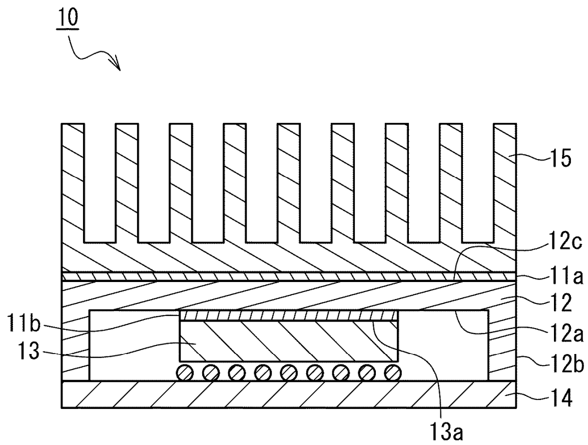


FIG. 1

EP 4 745 199 A1

## Description

### Technical Field

The present invention relates to a thermally conductive composition that is suitably interposed between a heat dissipating body and a heat generating portion in electrical and electronic components and the like, a thermally conductive sheet obtained using the thermally conductive composition, and a method for producing the thermally conductive sheet.

### Background Art

Recent dramatic improvement in performance of semiconductor devices such as CPUs has led to a considerable increase in the amount of heat generated by them. On this account, electronic components that generate heat are equipped with a heat dissipating body, and a thermally conductive sheet is used to improve the adhesion between a semiconductor and a heat dissipating portion. As devices become smaller, more sophisticated, and more highly integrated, there is an increasing demand for a flexible thermally conductive sheet having a high thermal conductivity. Patent Documents 1 to 3 propose using an addition cured silicone polymer containing a curing catalyst, with an inner portion being in a low-cured or uncured state and the surface being a cured skin layer. The applicant of the present application proposes a thermally conductive sheet in which a cured sheet and an uncured sheet are attached to each other in Patent Document 4.

### Prior Art Documents

### Patent Document

[Patent Document 1] JP 2009-203373A
[Patent Document 2] JP 2008-280395A
[Patent Document 3] JP 2007-224102A
[Patent Document 4] JPWO 2019-206190A

### Disclosure of Invention

### Problem to be Solved by the Invention

However, conventional thermally conductive compositions and thermally conductive sheets formed using such thermally conductive compositions have a problem in that as the thermal conductivity becomes higher, the degree of plasticity of the compositions becomes higher and formability becomes worse.

In order to solve the above-described problem in the conventional art, the present invention provides a thermally conductive composition that has a high thermal conductivity, a low degree of plasticity, and good formability, a thermally conductive sheet obtained using the thermally conductive composition, and a method for producing the thermally conductive sheet.

### Means for Solving Problem

A thermally conductive composition according to the present invention is a thermally conductive composition containing: a matrix resin (component A) and thermally conductive particles, wherein the thermally conductive particles include the following components B and C,

the component B being alumina having a D50 (median diameter) of 0.01 μm or more and less than 1 μm in a volume-based cumulative particle size distribution, and contained in an amount of 220 to 500 parts by mass with respect to 100 parts by mass of the component A,
the component C being aluminum nitride having a D50 (median diameter) of 0.01 μm or more and 150 μm or less, and contained in an amount of 1900 to 2500 parts by mass with respect to 100 parts by mass of the component A, and
the thermally conductive composition is in an uncured state.

A thermally conductive sheet according to the present invention is formed from the thermally conductive composition described above.

A method for producing a thermally conductive sheet according to the present invention includes: obtaining an uncured thermally conductive sheet by defoaming the thermally conductive composition under vacuum and rolling the defoamed thermally conductive composition to form a sheet.

Effects of the Invention

The present invention can provide a thermally conductive composition that has a high thermal conductivity, a low degree of plasticity, and good formability by keeping the composition uncured and adding a large amount of thermally conductive particles thereto, and provide a thermally conductive sheet obtained using the thermally conductive composition. Specifically, the degree of plasticity of the thermally conductive composition after defoaming is preferably less than 100, and the thermal conductivity is preferably 14 W/m·K or more. Also, the method for producing a thermally conductive sheet according to the present invention enables continuous sheet formation because the composition has a low degree of plasticity and good formability.

Brief Description of Drawings

[FIG. 1] FIG. 1 is a schematic cross-sectional view illustrating how a thermally conductive sheet according to an embodiment of the present invention is used.
[FIG. 2] FIGS. 2A and 2B are schematic diagrams illustrating a method for measuring the thermal conductivity of a sample in an example of the present invention.

Description of the Invention

The present invention relates to an uncured thermally conductive composition containing a matrix resin and thermally conductive particles. The matrix resin is preferably a thermosetting resin such as silicone rubber, silicone gel, an unreacted silicone oil, acrylic rubber, fluororubber, an epoxy resin, a phenolic resin, an unsaturated polyester resin, a melamine resin, an acrylic resin, or a fluororesin, or a thermoplastic resin such as polyurethane, polyethylene, polypropyrene, polyethylene glycol, or an ethylene·α-olefin copolymer. In particular, silicone polymers or unreacted silicone oils are preferable. Silicone is preferable because of its high heat resistance. Further, silicone is preferable because silicone is not corrosive to the surroundings, and releases little by-products to the outside of the system. The present invention can provide a thermally conductive composition that has a high thermal conductivity, a low degree of plasticity, and good formability by keeping the matrix resin uncured and adding a large amount of thermally conductive particles thereto, and provide a thermally conductive sheet obtained using the thermally conductive composition.

The following thermally conductive particles (component B, component C) are added with respect to 100 parts by mass of the matrix resin (component A). (1) Component B: alumina having a D50 (median diameter) of 0.01 pm or more and less than 1 μm in a volume-based cumulative particle size distribution, and added in an amount of 220 to 500 parts by mass with respect to 100 parts by mass of the component A. The amount of the component B added is preferably 230 to 480 parts by mass, and more preferably 240 to 440 parts by mass.

The component B preferably includes the following components B-1 and B-2.

- Component B-1: alumina having a D50 (median diameter) of 0.01 μm or more and less than 0.3 μm and a BET specific surface area of 9 $m^2$/g or more, and contained in an amount of 30% by mass to 100% by mass with respect to 100% by mass of the component B. The D50 (median diameter) is preferably 0.1 pm or more and less than 0.3 pm. The BET specific surface area is preferably 9 to 20 $m^2$/g, and more preferably 10 to 18 $m^2$/g. Note that the BET specific surface area is measured in accordance with JIS R 1626-1996.
- Component B-2: alumina having a D50 (median diameter) of 0.3 μm or more and less than 1 pm, and contained in an amount of 0 to 70% by mass with respect to 100% by mass of the component B. The D50 (median diameter) is preferably 0.3 μm or more and 1.0 μm or less.

(2) Component C: aluminum nitride having a D50 (median diameter) of 0.01 μm or more and 150 μm or less, and contained in an amount of 1900 to 2500 parts by mass with respect to 100 parts by mass of the component A. The D50 (median diameter) is preferably 0.1 pm or more and 120 μm or less. The amount of the component C added is preferably 1920 to 2400 parts by mass, and more preferably 1940 to 2300 parts by mass.

The component C preferably includes the following components C-1 and C-2.

- Component C-1 having a D50 (median diameter) of 0.01 pm or more and less than 30 μm.

- Component C-2 having a D50 (median diameter) of 30 μm or more and 150 μm or less.

Note that a mass ratio between the component C-1 and the component C-2 satisfies: the component C-2 ≤ the component C-1.

In the present invention, a plurality of types of inorganic particles with different average particle sizes are used in combination as the thermally conductive particles. In this case, small-size thermally conductive inorganic particles fill the gaps between large-size particles, and it is possible to fill the matrix resin in almost the densest possible state and the thermally conductive composition has a high thermal conductivity. Also, it is possible to obtain a thermally conductive composition having a low degree of plasticity and good formability.

The degree of plasticity of the thermally conductive composition after vacuum defoaming is preferably less than 100, more preferably 10 to 99, further preferably 20 to 99, and particularly preferably 30 to 99. In this case, it is possible to obtain a thermally conductive composition having a low degree of plasticity and good formability. The degree of plasticity is determined in accordance with JIS K 6300-3 and ISO 2007:1991 as follows: using a Wallace plastometer, a sample is compressed between two metal plates under a predetermined load (100 N) for a predetermined time (15 sec) at a measurement temperature of 25°C, and the degree of plasticity ($P_0 = t/t_0 \times 100$) is calculated by dividing the thickness (t) of the compressed sample by the thickness ($t_0$) of the sample before being compressed. The smaller the value $P_0$ is, the more flexible the sample is.

The thermal conductivity of the thermally conductive composition is preferably 14 W/m·K or more, more preferably 14 to 20 W/m·K, and further preferably 14.5 to 20 W/m·K. As a result, the sheet obtained using the thermally conductive composition has a high thermal conductivity and is suitable as a heat dissipation sheet: TIM (Thermal Interface Material).

The SHORE 00 hardness of the thermally conductive composition is preferably 75 or less, more preferably 10 to 75, and further preferably 15 to 72. Such a composition has good conformability to a heat generating body and a heat dissipating body (heat sink).

It is preferable to further add a silane coupling agent in an amount of 0.1 to 10 parts by mass, or more preferably 0.5 to 7 parts by mass with respect to 100 parts by mass of the matrix resin. The silane coupling agent covers the surface of the thermally conductive particles (surface treatment), thereby allowing the thermally conductive particles to fill the matrix resin more easily (functioning as a plasticizer).

The silane coupling agent may be, for example, a silane compound represented by $R(CH_3)_aSi(OR')_{4-a}$ (R represents an unsubstituted or substituted organic group having 1 to 20 carbon atoms, R' represents an alkyl group having 1 to 4 carbon atoms, and a represents 0 or 1), or a partial hydrolysate thereof. Examples of an alkoxysilane compound represented by $R(CH_3)_aSi(OR')_{4-a}$ (where R represents an unsubstituted or substituted organic group having 1 to 20 carbon atoms, R' represents an alkyl group having 1 to 4 carbon atoms, and a represents 0 or 1) (simply referred to as "silane" hereinafter) include silane compounds such as methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, and octadecyltriethoxysilane. These silane compounds can be used alone or in a combination of two or more.

At least one component selected from the group consisting of alumina (aluminum oxide) used as the component B and aluminum nitride used as the component C is preferably in the form of irregularly-shaped crushed particles. Irregularly-shaped crushed particles are easily available. Hereinafter, the "irregularly-shaped crushed" state is also referred to simply as "irregularly-shaped".

A thermally conductive sheet formed from the thermally conductive composition according to the present invention is very versatile and suitable as a TIM. The thickness of the thermally conductive sheet is preferably 0.2 to 10 mm.

A method for producing a thermally conductive sheet according to the present invention includes: defoaming the thermally conductive composition under vacuum; and rolling the defoamed thermally conductive composition to form a sheet. The thermally conductive composition (compound) is defoamed under vacuum by being left under a reduced pressure of -0.08 to -0.1 Pa for 5 to 10 minutes. The rolling may be rolling using rotating rolls or pressing, for example, and rolling using rotating rolls is preferable because it enables continuous production. The resulting thermally conductive sheet has a substantially uniform composition from an inner portion to an outer portion. A sheet with a uniform composition will maintain uniform physical properties even after being mounted on electrical and electronic components as a TIM.

The thermally conductive composition preferably has a dielectric breakdown voltage (JIS K 6249) of 7 to 16 kV/mm. In this case, it is possible to obtain a thermally conductive sheet having high electrical insulation properties.

The thermally conductive composition preferably has a volume resistivity (JIS K 6249) of $10^{10}$ to $10^{14}$ Ω·cm. In this case, it is possible to obtain a thermally conductive sheet having high electrical insulation properties.

A silicone polymer will be described as the matrix resin. An addition curable silicone polymer, a peroxide curable silicone polymer, a condensation silicone polymer, or an unreacted silicone oil is preferable as an example of the silicone polymer. They can be used alone or mixed and then used. Each silicone polymer will be described below.

(1) Addition curable silicone polymer

A solution A or solution B of commercially available two-component type silicone polymer containing a polyorganosiloxane is used as the addition curable silicone polymer. In this two-component type silicone polymer, one of the components (solution A or part A) contains a base polymer component (component A1 below) and a platinum group metal catalyst. The other component (solution B or part B) contains a base polymer component (component A1 below) and an organohydrogenpolysiloxane used as a crosslinking component (component A2 below). The mass ratio between the part A and the part B is A : B = 100 : 100. In this case, the part A is used alone or the part B is used alone. An unreacted silicone oil may be added to each part. The platinum group metal catalyst in the part A may be a material that is not added to the part A.

(2) Peroxide curable silicone polymer

The peroxide curable silicone polymer may or may not contain a catalyst, provided that it is not heat-cured.

(3) Condensation silicone polymer

The condensation silicone polymer is used without a curing catalyst.
With use of the above silicone polymer, it is possible to obtain a thermally conductive composition and a thermally conductive sheet that are in an uncured state, and has a low degree of plasticity and good formability.
The addition curable silicone polymer is composed of the following components (A1) and (A2).

(A1) Base polymer component: a linear organopolysiloxane having at least two silicon-bonded alkenyl groups per molecule.
(A2) Crosslinking component: an organohydrogenpolysiloxane having at least two silicon-bonded hydrogen atoms per molecule, contained such that the number of moles of the organohydrogenpolysiloxane is less than 1 mole with respect to 1 mole of silicon-bonded alkenyl groups contained in the component A.

In addition to the above-described components (A1) and (A2), the addition curable silicone polymer may further contain an organopolysiloxane having no reactive group, such as an unreacted silicone oil, e.g., dimethylpolysiloxane.
In the present specification, the total amount of the liquid components, that is, the silicone polymer, and if necessary, an unreacted silicone oil and a silane coupling agent used, is taken to be 100 parts by mass.
The following describes each component.

(1) Base polymer component (component A1)

The base polymer component is an organopolysiloxane having two or more silicon-bonded alkenyl groups per molecule. The organopolysiloxane having two or more alkenyl groups is the main agent (base polymer component) of a silicone rubber composition according to the present invention. The organopolysiloxane has two silicon-bonded alkenyl groups having 2 to 8 carbon atoms, in particular 2 to 6 carbon atoms, such as a vinyl group or an allyl group, per molecule. The viscosity of the organopolysiloxane is desirably 10 to 1,000,000 mPa·s and particularly desirably 100 to 100,000 mPa·s at 25°C from the viewpoint of workability or the like.
Specifically, an organopolysiloxane having two or more alkenyl groups bonded to silicon atoms that are at both ends of the molecular chain per molecule as represented by the following general formula (Chemical Formula 1) is used. Such an organopolysiloxane is a linear organopolysiloxane whose side chains are capped with alkyl groups. The viscosity of the organopolysiloxane is desirably 10 to 1,000,000 mPa·s at 25°C from the viewpoint of workability or the like. Note that the linear organopolysiloxane may contain a small amount of branched structure (trifunctional siloxane unit) in the molecular chain.

[Chemical Formula 1]

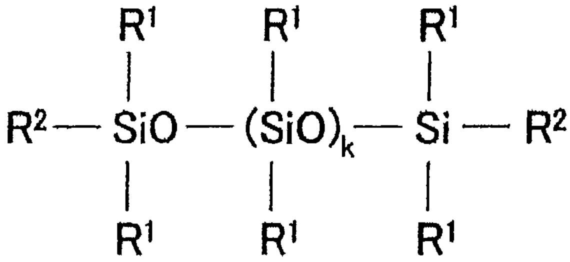

In the above formula, $R^1$s are the same as or different from each other and each represent an unsubstituted or substituted monovalent hydrocarbon group having no aliphatic unsaturated bond, $R^2$ represents an alkenyl group, and k represents 0 or a positive integer. The unsubstituted or substituted monovalent hydrocarbon group having no aliphatic unsaturated bond and represented by $R^1$ preferably has 1 to 10 carbon atoms, in particular, 1 to 6 carbon atoms, for example, and specific examples thereof include: alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; and these groups in which at least one or all of hydrogen atoms are substituted by a halogen atom such as fluorine, bromine, or chlorine or by a cyano group or the like, for example, halogen-substituted alkyl groups such as a chloromethyl group, a chloropropyl group, a bromoethyl group, and a trifluoropropyl group, and a cyanoethyl group. The alkenyl group represented by $R^2$ preferably has 2 to 6 carbon atoms, in particular, 2 or 3 carbon atoms, for example, and specific examples thereof include a vinyl group, an allyl group, a propenyl group, an isopropenyl group, a butenyl group, an isobutenyl group, a hexenyl group, and a cyclohexenyl group, and a vinyl group is preferable. In the general formula (1), k typically represents 0 or a positive integer satisfying $0 \leq k \leq 10{,}000$, preferably an integer satisfying $5 \leq k \leq 2{,}000$, and more preferably an integer satisfying $10 \leq k \leq 1{,}200$.

An organopolysiloxane having 3 or more, typically 3 to 30, and preferably about 3 to 20 silicon-bonded alkenyl groups per molecule, in which each alkenyl group is an alkenyl group having 2 to 8 carbon atoms, in particular 2 to 6 carbon atoms, such as a vinyl group or an allyl group, may also be used in combination as the component A1. The molecular structure of the organopolysiloxane to be used in combination may be a linear, cyclic, branched, or three-dimensional network structure. The organopolysiloxane to be used in combination is preferably a linear organopolysiloxane in which the main chain is composed of repeating diorganosiloxane units and both ends of the molecular chain are capped with triorganosiloxy groups and that has a viscosity of 10 to 1,000,000 mPa·s, in particular 100 to 100,000 mPa·s, at 25°C.

Each alkenyl group may be bonded to any part of the molecule. For example, the organopolysiloxane may include alkenyl groups bonded to either a silicon atom that is at the end of the molecular chain or a silicon atom that is not at the end (but in the middle) of the molecular chain. In particular, a linear organopolysiloxane having 1 to 3 alkenyl groups on a silicon atom at each end of the molecular chain as represented by the following general formula (Chemical Formula 2) and having a viscosity of 10 to 1,000,000 mPa·s at 25°C is desirable from the viewpoint of workability or the like as described above. However, if the sum of the alkenyl groups bound to the silicon atoms that are at both ends of the molecular chain is less than 3, the linear organopolysiloxane has at least one alkenyl group bound to a silicon atom that is not at the ends (but in the middle) of the molecular chain (as a substituent in a diorganosiloxane unit, for example). Note that the linear organopolysiloxane may contain a small amount of branched structure (trifunctional siloxane unit) in the molecular chain.

[Chemical Formula 2]

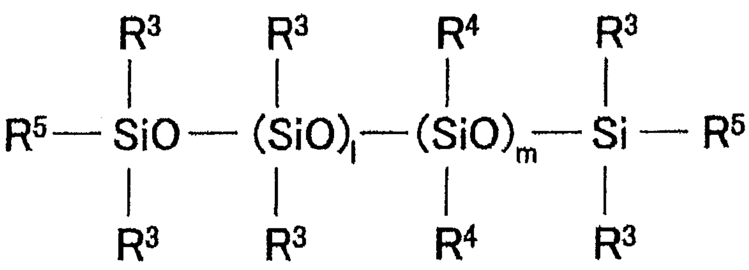

In the above formula, $R^3$s are the same as or different from each other and each represent an unsubstituted or

substituted monovalent hydrocarbon group, and at least one $R^3$ is an alkenyl group. $R^4$s are the same as or different from each other and each represent an unsubstituted or substituted monovalent hydrocarbon group having no aliphatic unsaturated bond, $R^5$ represents an alkenyl group, and l and m each represent 0 or a positive integer. The monovalent hydrocarbon group represented by $R^3$ preferably has 1 to 10 carbon atoms, in particular, 1 to 6 carbon atoms, and specific examples thereof include: alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; alkenyl groups such as a vinyl group, an allyl group, a propenyl group, an isopropenyl group, a butenyl group, a hexenyl group, a cyclohexenyl group, and an octenyl group; and these groups in which at least one or all of hydrogen atoms are substituted by a halogen atom such as fluorine, bromine, or chlorine or by a cyano group or the like, for example, halogen-substituted alkyl groups such as a chloromethyl group, a chloropropyl group, a bromoethyl group, and a trifluoropropyl group, and a cyanoethyl group.

The monovalent hydrocarbon group represented by $R^4$ preferably has 1 to 10 carbon atoms, in particular, 1 to 6 carbon atoms, and specific examples thereof include the specific examples of $R^1$ listed above, excluding the alkenyl groups. The alkenyl group represented by $R^5$ preferably has 2 to 6 carbon atoms, in particular, 2 or 3 carbon atoms, for example, and specific examples thereof include the examples of $R^2$ in the above formula (Chemical Formula 1), and a vinyl group is preferable. l and m each typically represent 0 or a positive integer satisfying $0 < l+m \le 10,000$, preferably $5 \le l+m \le 2,000$, more preferably $10 \le l+m \le 1,200$, and also satisfying $0 < l(l+m) \le 0.2$, or more preferably $0.0011 \le l/(l+m) \le 0.1$.

(2) Crosslinking component (component A2)

The organohydrogenpolysiloxane used as the component A2 of the present invention acts as a crosslinking agent. SiH groups in this component and alkenyl groups in the component A undergo an addition reaction (hydrosilylation) to achieve crosslinking (curing). However, the composition of the present invention is in the uncured state. Any organohydrogenpolysiloxane having two or more silicon-bonded hydrogen atoms (i.e., SiH groups) per molecule can be used as the crosslinking component. The molecular structure of this organohydrogenpolysiloxane may be a linear, cyclic, branched, or three-dimensional network structure. It is possible to use an organohydrogenpolysiloxane in which the number of silicon atoms per molecule (i.e., the degree of polymerization) is 2 to 1,000, in particular, around 2 to 300.

There is no particular limitation on the positions of silicon atoms to which the hydrogen atoms are bonded, and the hydrogen atoms may be bonded to silicon atoms that are at the ends of the molecular chain or are not at the ends (but in the middle) of the molecular chain. Examples of a silicon-bonded organic group other than the hydrogen atoms include the unsubstituted or substituted monovalent hydrocarbon groups having no aliphatic unsaturated bond listed above as examples of $R^1$ in the general formula (Chemical formula 1).

An example of the organohydrogenpolysiloxane used as the component A2 has the following structure.

[Chemical Formula 3]

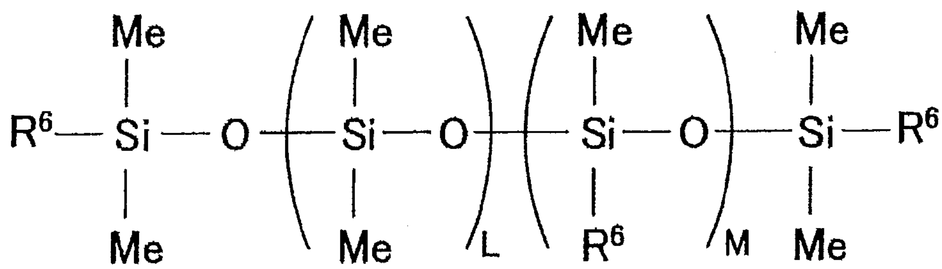

In the above formula, $R^6$s are the same as or different from each other and each represent an alkyl group, a phenyl group, an epoxy group, an acryloyl group, a methacryloyl group, an alkoxy group, or a hydrogen atom, and at least two $R^6$s are hydrogen atoms. L represents an integer of 0 to 1,000, in particular, an integer of 0 to 300, and M represents an integer of 1 to 200.

(3) Unreacted silicone oil

An unreacted silicone oil can also be used as the matrix resin. Dialkyl polysiloxanes such as dimethyl polysiloxane or linear organopolysiloxanes such as diphenyl polysiloxane are preferable as the unreacted silicone oil. The unreacted silicone oil preferably has a viscosity of 1 to 10,000 $mm^2/s$ at 25°C.

(4) Thermally conductive particles (component B and component C)

In the present invention, it is preferable to use at least three types of inorganic particles with different average particle sizes in combination as the thermally conductive particles. In the case where three types of inorganic particles are used, the components B-1, C-1, and C-2 are used. In the case where four types of inorganic particles are used, the component B-2 is additionally used. In this case, small-size thermally conductive inorganic particles fill the gaps between large-size particles, and it is possible to fill the matrix resin in almost the densest possible state and the thermally conductive composition has a high thermal conductivity.

(5) Other additives

The composition of the present invention may contain components other than the above-described components, when necessary. For example, it is possible to add a heat resistance improver such as red iron oxide, titanium oxide, or cerium oxide, a flame retardant auxiliary, and the like. Moreover, an organic or inorganic pigment may be added for the purpose of coloring and toning. The silane coupling agent described above may also be added.

The following describes the present invention with reference to the drawings. In the drawings described below, the same reference numerals denote the same components. FIG. 1 is a schematic cross-sectional view illustrating a heat dissipation structure 10 in which thermally conductive sheets of an embodiment of the present invention are incorporated. A thermally conductive sheet 11b dissipates heat generated by an electronic component 13 such as a semiconductor element, is fixed to a main surface 12a of a heat spreader 12 facing the electronic component 13, and is sandwiched between the electronic component 13 and the heat spreader 2. Further, a thermally conductive sheet 11a is sandwiched between the heat spreader 12 and a heat sink 15. The thermally conductive sheets 11a and 11b and the heat spreader 2 constitute a heat dissipating member that dissipates heat from the electronic component 13. The heat spreader 12 is in the form of a rectangular plate, for example, and has the main surface 12a facing the electronic component 13 and side walls 12b extending vertically from the periphery of the main surface 12a. In the heat spreader 2, the thermally conductive sheet 11b is provided on the main surface 12a surrounded by the side walls 12b, and the heat sink 15 is provided via the thermally conductive sheet 11a on a surface 12c of the heat spreader 2, which is on the side opposite to the main surface 12a. The electronic component 13 is a semiconductor element such as a BGA, for example, and is mounted on a wiring board 14.

[Examples]

Hereinafter, examples will be described. The present invention is not limited to the examples. Various parameters were measured using the following methods.

<Thermal conductivity>

The thermal conductivity of a thermally conductive silicone rubber sheet was measured using a hot disk (in accordance with ISO 22007-2:2008). As shown in FIG. 2A, this thermal conductivity measuring device 1 sandwiches a polyimide film sensor 2 between two samples 3a and 3b, applies a constant power to the sensor 2 to cause a certain amount of heat generation, and analyzes thermal characteristics based on the value of the temperature rise of the sensor 2. The sensor 2 has a tip 4 with a diameter of 7 mm. As shown in FIG. 2B, the tip 4 has a double spiral electrode structure, and electrodes 5 for applied current and electrodes 6 for resistance value (electrode for temperature measurement) are arranged in a lower portion of the sensor 2. The thermal conductivity was calculated using the following formula (Math 1).

[Math 1]

$$\lambda = \frac{Po \cdot D(\tau)}{\pi^{3/2} \cdot r} \cdot \frac{D(\tau)}{\Delta T(\tau)}$$

$\lambda$: Thermal conductivity (W/m·K)
$P_0$: Constant power (W)
r: Radius of sensor (m)
$\tau$: $\sqrt{\alpha \cdot t/r^2}$
$\alpha$: Thermal diffusivity of sample ($m^2/s$)
t: Measuring time (s)

D(τ): Dimensionless function of τ
ΔT(τ): Temperature rise of sensor (K)

<Hardness>

The hardness of the thermally conductive silicone rubber sheet was measured in accordance with SHORE 00.

<Degree of plasticity>

The degree of plasticity was determined in accordance with JIS K 6300-3 and ISO 2007:1991 as follows: using a Wallace plastometer, a sample was compressed between two metal plates under a predetermined load (100 N) for a predetermined time (15 sec) at a measurement temperature of 23°C, and the degree of plasticity ($P_0 = t/t_0 \times 100$) was calculated by dividing the thickness (t) of the compressed sample by the thickness ($t_0$) of the sample before being compressed. The larger the value $P_0$ is, the more flexible the sample is. The degree of plasticity before vacuum is the degree of plasticity of a compound that has just been produced. The degree of plasticity after defoaming is the degree of plasticity after the produced compound is defoamed under a reduced pressure of -0.1 Pa for 5 minutes. The degree of plasticity after defoaming is important because the compound is formed into a sheet after being defoamed.

<Formability>

The formability was determined by whether or not a sheet can be formed when a material with a thickness of 6 to 10 mm was sandwiched between PET films and rolled to have a thickness of 2 mm. The criteria are as follows.

A: Uniform sheet.
B: The sheet was not uniform and a portion of the sheet was separated therefrom.

<Whether or not matrix resin can be filled>

It was determined whether the matrix resin and the thermally conductive particles were mixed uniformly when a compound was produced. The criteria are as follows.

A: It was possible to uniformly mix the matrix resin and the thermally conductive particles, and to fill the matrix resin with the thermally conductive particles.
B: It was not possible to uniformly mix the matrix resin and the thermally conductive particles, and it was not possible to fill the matrix resin with the thermally conductive particles.

<BET specific surface area>

The BET specific surface area of thermally conductive particles was measured in accordance with JIS R 1626-1996. The larger the BET specific surface area, the smaller D50 (median diameter) of the thermally conductive particles in a volume-based cumulative particle size distribution.

(Examples 1 to 7 and Comparative Examples 1 to 3)

1. Material components

(1) Matrix resin (component A)

The following materials were used.

- Part A of a commercially available two-component type silicone polymer (silicone component) containing a polyorganosiloxane.
- Part B of the same as above.
- Dimethylpolysiloxane was used as an unreacted silicone oil (viscosity at 25°C: 100 $mm^2/s$).
- Decyltrimethoxysilane was used as a silane coupling agent.

(2) Thermally conductive particles (component B)

Thermally conductive particles shown in Table 1 were used. The average particle size is D50 (median diameter) in a volume-based cumulative particle size distribution measured by a laser diffraction/scattering method. A measuring instrument to be used in this method may be, for example, a laser diffraction/scattering particle size distribution analyzer LA-950 S2 manufactured by HORIBA, Ltd.

(3) Thermally conductive particles (component C)

Thermally conductive particles shown in Table 1 were used. The average particle size is D50 (median diameter) in a volume-based cumulative particle size distribution measured by a laser diffraction/scattering method. A measuring instrument to be used in this method may be, for example, a laser diffraction/scattering particle size distribution analyzer LA-950 S2 manufactured by HORIBA, Ltd. AlN in the tables is the abbreviation of aluminum nitride.

2. Composition

The materials in amounts shown in Table 1 were weighed and mixed in a mixer to obtain a composition. In Tables 1 and 2, the amount of each material is indicated as an amount (parts by mass) when the total amount of the silicone polymer, and if necessary, the unreacted silicone oil and the silane coupling agent used, is 100 parts by mass (100 g). The composition was defoamed under a reduced pressure of -0.1 Pa for 5 minutes.

3. Sheet forming process

The composition was sandwiched between polyethylene terephthalate (PET) films that had been subjected to a release treatment, and then was formed into a sheet having a thickness of 2.0 mm by rolling using even-speed rolls, to form a thermally conductive silicone rubber sheet. The formability was determined to be "formable" when sheet forming under the above-described conditions was possible and as "failed" when sheet forming under the above-described conditions was not possible.

The above-described conditions and results are shown in Table 1.

[Table 1]

| | | | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 |
|---|---|---|---|---|---|---|---|---|---|---|---|---|---|---|
| (A) | Matrix Resin | Two-component Curing Type (Part A) | | | | | | | | 94 | | | | |
| | | Two-component Curing Type (Part B) | | | 95 | 93 | 93 | 93 | 93 | | 43 | 93 | 93 | 97 |
| | | Unreacted Oil | | | | | | | | | 50 | | | |
| Additive (Silane Coupling Agent) | | | | | 5 | 7 | 7 | 7 | 7 | 6 | 7 | 7 | 7 | 3 |
| | | | Particle Size (μm) | BET Specific Surface Area | | | | | | | | | | |
| (B) | (B-1) | Irregularly-shaped Alumina | 0.16 | 13 $m^2/g$ | 150 | 150 | | | | | | 200 | 550 | 400 |
| | | Irregularly-shaped Alumina | 0.21 | 11 $m^2/g$ | | | 300 | 400 | 90 | 400 | 400 | | | |
| | (B-2) | Irregularly-shaped Alumina | 0.3 | 7 $m^2/g$ | 100 | 150 | | | 180 | | | | | |
| | | Irregularly-shaped Alumina | 0.88 | 16 $m^2/g$ | | | | | | | | | | |
| (C) | | Irregularly-shaped AlN | 1 | - | 450 | 450 | 500 | 400 | 400 | 400 | 400 | 400 | 400 | 400 |
| | | Irregularly-shaped AlN | 20 | - | 750 | 700 | 1000 | 700 | 900 | 700 | 700 | 700 | 700 | 700 |
| | | Irregularly-shaped AlN | 70 | - | | | 700 | | | | | | | |
| | | Irregularly-shaped AlN | 84 | - | | | | 1000 | 800 | 1000 | 1000 | 900 | 800 | 700 |
| | | Irregularly-shaped AlN | 108 | - | 850 | 800 | | | | | | | | |
| Total Amount of Filler in Parts by Mass | | | | | 2300 | 2250 | 2500 | 2500 | 2370 | 2500 | 2500 | 2200 | 2450 | 2200 |
| Total Amount of Composition in Parts by Mass | | | | | 2400 | 2350 | 2600 | 2600 | 2470 | 2600 | 2600 | 2300 | 2550 | 2300 |
| (B) Amount of Alumina in Parts by Mass | | | | | 250 | 300 | 300 | 400 | 270 | 400 | 400 | 200 | 550 | 400 |

(continued)

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 |
|---|---|---|---|---|---|---|---|---|---|---|
| (C) Amount of Aluminum Nitride in Parts by Mass | 2050 | 1950 | 2200 | 2100 | 2100 | 2100 | 2100 | 2000 | 1900 | 1800 |
| Percentage of (B-1) in (B) [%] | 60 | 50 | 100 | 100 | 33.3 | 100 | 100 | 100 | 100 | 100 |
| AlN 1-30 pm | 1200 | 1150 | 1500 | 1100 | 1300 | 1100 | 1100 | 1100 | 1100 | 1100 |
| AlN 50 μm or more | 850 | 800 | 700 | 1000 | 800 | 1000 | 1000 | 900 | 800 | 700 |
| Hardness (SHORE00) | 46 | 43 | 45 | 57 | 54 | 66 | 65 | - | 70 | 60 |
| Thermal Conductivity (HotDisk) | 14.6 | 14.6 | 14.9 | 15.6 | 14.9 | 15.7 | 15.9 | - | 13.0 | 12.6 |
| Degree of Plasticity of Materials | 68 | 73 | 65 | 77 | 86 | 82.5 | 81.1 | 100 | 75.6 | 56.4 |
| Whether or not matrix resin can be filled | A | A | A | A | A | A | A | A | A | A |
| Formability | A | A | A | A | A | A | A | B | A | A |

As can be seen from Table 1, in Examples 1 to 7, the thermal conductivity was high, the degree of plasticity of the composition was low, and it was possible to obtain a thermally conductive composition having good formability and a low degree of plasticity and a thermally conductive sheet. In contrast, Comparative Example 1 had a high degree of plasticity and thus it was not possible to conduct the forming process and to obtain a sheet. Comparative Example 2 was not preferable because the amount of alumina added was small, and the thermal conductivity was low. Comparative Example 3 was not preferable because the amount of aluminum nitride added was small and the thermal conductivity was low.

Industrial Applicability

A thermally conductive composition and a thermally conductive sheet according to the present invention are suitable as a heat dissipation sheet: TIM (Thermal Interface Material) to be interposed between a heat dissipating body and a heat generating portion in electrical and electronic components and the like.

Description of Reference Numerals

| | |
|---|---|
| 1 | Thermal conductivity measuring device |
| 2 | Sensor |
| 3a, 3b | Sample |
| 4 | Tip of sensor |
| 5 | Electrode for applied current |
| 6 | Electrode for resistance value (electrode for temperature measurement) |
| 10 | Heat dissipation structure |
| 11a, 11b | Thermally conductive sheet |
| 12 | Heat spreader |
| 13 | Electronic component |
| 14 | Wiring board |
| 15 | Heat sink |

**Claims**

**1.** A thermally conductive composition comprising:

a matrix resin (component A); and
thermally conductive particles,
wherein the thermally conductive particles include the following components B and C,
the component B being alumina having a D50 (median diameter) of 0.01 pm or more and less than 1 pm in a volume-based cumulative particle size distribution, and contained in an amount of 220 to 500 parts by mass with respect to 100 parts by mass of the component A,
the component C being aluminum nitride having a D50 (median diameter) of 0.01 µm or more and 150 pm or less, and contained in an amount of 1900 to 2500 parts by mass with respect to 100 parts by mass of the component A, and
the thermally conductive composition is in an uncured state.

**2.** The thermally conductive composition according to claim 1,

wherein the component B includes the following components B-1 and B-2,
the component B-1 being alumina having a D50 (median diameter) of 0.01 µm or more and less than 0.3 pm and a BET specific surface area of 9 $m^2/g$ or more, and contained in an amount of 30% by mass to 100% by mass with respect to 100% by mass of the component B, and
the component B-2 being alumina having a D50 (median diameter) of 0.3 pm or more and less than 1 µm, and contained in an amount of 0 to 70% by mass with respect to 100% by mass of the component B.

**3.** The thermally conductive composition according to claim 1 or 2,

wherein the component C includes the following components C-1 and C-2,
the component C-1 having a D50 (median diameter) of 0.01 pm or more and less than 30 pm,

the component C-2 having a D50 (median diameter) of 30 pm or more and 150 pm or less, and
a mass ratio between the component C-1 and the component C-2 satisfies: the component C-2 ≤ the component C-1.

**4.** The thermally conductive composition according to any one of claims 1 to 3,
wherein the thermally conductive composition has a thermal conductivity of 14 W/m·K or more.

**5.** The thermally conductive composition according to any one of claims 1 to 4,
wherein the thermally conductive composition has a SHORE 00 hardness of 75 or less.

**6.** The thermally conductive composition according to any one of claims 1 to 5,
wherein the matrix resin is at least one selected from a silicone polymer and an unreacted silicone oil.

**7.** The thermally conductive composition according to claim 1, further comprising:
a silane coupling agent in an amount of 0.1 to 10 parts by mass with respect to 100 parts by mass of the matrix resin.

**8.** The thermally conductive composition according to any one of claims 1 to 7,
wherein at least one component selected from the group consisting of alumina used as the component B and aluminum nitride used as the component C is in the form of irregularly-shaped crushed particles.

**9.** The thermally conductive composition according to any one of claims 1 to 8,
wherein a degree of plasticity of the thermally conductive composition after vacuum defoaming is less than 100.

**10.** A thermally conductive sheet formed from the thermally conductive composition according to any one of claims 1 to 9.

**11.** The thermally conductive sheet according to claim 10,
wherein the thermally conductive sheet has a thickness of 0.2 to 10 mm.

**12.** A method for producing a thermally conductive sheet, comprising
obtaining an uncured thermally conductive sheet by defoaming the thermally conductive composition according to any one of claims 1 to 9 in a vacuum and rolling the defoamed thermally conductive composition to form a sheet.

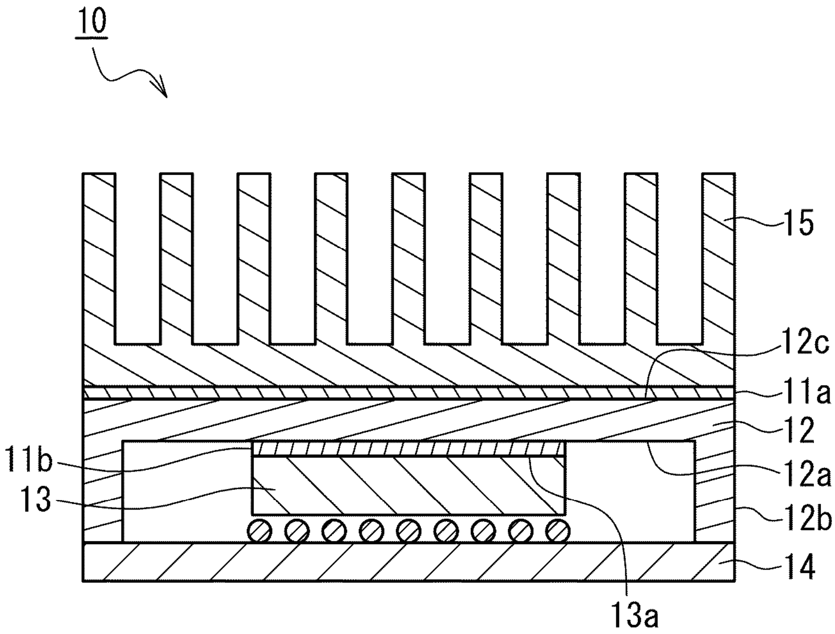


FIG. 1

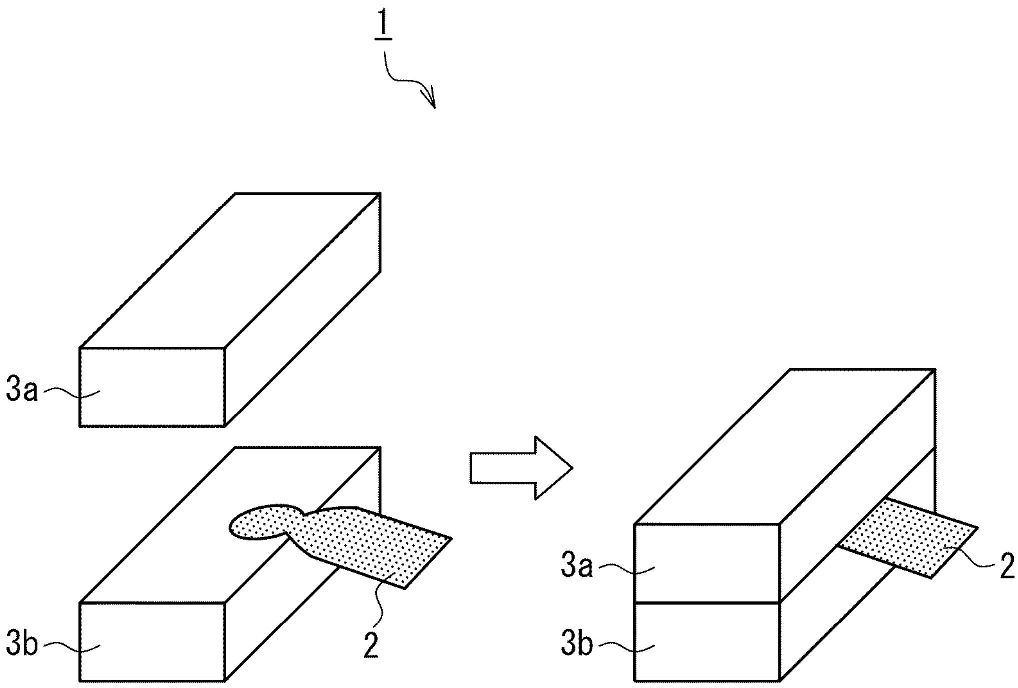


FIG. 2A

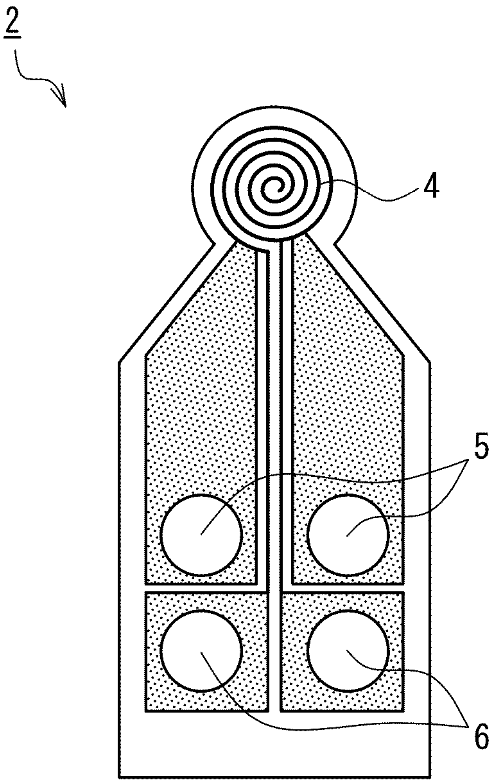


FIG. 2B

**INTERNATIONAL SEARCH REPORT**

International application No. **PCT/JP2024/015823**

**A. CLASSIFICATION OF SUBJECT MATTER**

***C08L 101/00***(2006.01)i; ***C08J 5/18***(2006.01)i; ***C08K 3/22***(2006.01)i; ***C08K 3/28***(2006.01)i; ***C08K 5/541***(2006.01)i; ***C08L 83/04***(2006.01)i
FI: C08L101/00; C08L83/04; C08K3/22; C08K3/28; C08K5/541; C08J5/18 CEZ; C08J5/18 CFH

According to International Patent Classification (IPC) or to both national classification and IPC

**B. FIELDS SEARCHED**

Minimum documentation searched (classification system followed by classification symbols)

C08L1/00-101/14; C08K3/00-13/08; C08J5/00-5/02; 5/12-5/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/137086 A1 (FUJI POLYMER INDUSTIRES CO., LTD.) 02 July 2020 (2020-07-02) entire text | 1-12 |
| A | JP 2002-322372 A (DENKI KAGAKU KOGYO K.K.) 08 November 2002 (2002-11-08) entire text | 1-12 |
| A | WO 2023/119903 A1 (RESONAC CORPORATION) 29 June 2023 (2023-06-29) entire text | 1-12 |
| A | JP 2005-054099 A (DENKI KAGAKU KOGYO K.K.) 03 March 2005 (2005-03-03) entire text | 1-12 |
| A | WO 2017/203924 A1 (SHIN-ETSU CHEMICAL CO., LTD.) 30 November 2017 (2017-11-30) entire text | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/015823**

**C. DOCUMENTS CONSIDERED TO BE RELEVANT**

| Category* | Citation of document, with indication, where appropriate, of the relevant passages | Relevant to claim No. |
|---|---|---|
| A | WO 2023/135857 A1 (FUJI POLYMER INDUSTIRES CO., LTD.) 20 July 2023 (2023-07-20) entire text | 1-12 |

Form PCT/ISA/210 (second sheet) (July 2022)

**INTERNATIONAL SEARCH REPORT**
**Information on patent family members**

International application No.
**PCT/JP2024/015823**

| Patent document cited in search report | Publication date (day/month/year) | Patent family member(s) | Publication date (day/month/year) |
|---|---|---|---|
| WO 2020/137086 A1 | 02 July 2020 | JP 6692512 B1<br>US 2021/0017437 A1<br>entire text<br>EP 3753993 A1<br>KR 10-2020-0125685 A<br>CN 112041411 A<br>TW 202024238 A | |
| JP 2002-322372 A | 08 November 2002 | (Family: none) | |
| WO 2023/119903 A1 | 29 June 2023 | US 2024/0101885 A1<br>entire text<br>EP 4276151 A1<br>CN 116685643 A | |
| JP 2005-054099 A | 03 March 2005 | (Family: none) | |
| WO 2017/203924 A1 | 30 November 2017 | JP 2017-210518 A<br>US 2019/0292349 A1<br>entire text<br>EP 3467044 A1<br>CN 109312159 A<br>KR 10-2019-0011743 A<br>TW 201816068 A | |
| WO 2023/135857 A1 | 20 July 2023 | JP 7217079 B1<br>EP 4324885 A1<br>entire text<br>TW 202328344 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009203373 A
- JP 2008280395 A
- JP 2007224102 A
- WO 2019206190 A